# EUROPÄISCHE PATENTANMELDUNG

(11) **EP 3 670 933 A1**
(43) Veröffentlichungstag der Anmeldung: **24.06.2020**
(21) Anmeldenummer: 19212878.3
(22) Anmeldetag: 02.12.2019
(51) Int. Cl.: F16B 5/02, F16B 13/14, F16B 13/04, E06B 1/60, F16B 13/06, F16B 13/12

(54) **SPREIZDÜBEL**

(30) Priorität: 19.12.2018 DE 102018132968
(71) Anmelder: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(57) **Zusammenfassung**

Zu einer Befestigung eines Fensterrahmens (15) in einer Bauwerksöffnung (16) einer Wand (17) schlägt die Erfindung einen Spreizdübel (1) vor, der einen Spreizkanal aufweist, der in einem hinteren Spreizabschnitt (11), der sich in dem Fensterrahmen (15) befindet, enger ist als in einem vorderen Spreizabschnitt (10), der sich in der Wand (17) befindet. Bei einem Aufspreizen des Spreizdübels (1) durch Einschrauben einer Schraube schnüren Stege (18) und Profilwände (19) eines Hohlprofils des Fensterrahmens (15) den aufgrund des engeren Spreizkanals stärker aufgespreizten hinteren Spreizabschnitt (11) des Spreizdübels (1) ein, wodurch ein fester Halt des Fensterrahmens (15) auf dem Spreizdübel (1) erreicht wird. Der Spreizdübel (1) behält einen Abstand des Fensterrahmens (15) von einer Laibung der Bauwerksöffnung (16) in der Wand (17) bei.

## Beschreibung

Die Erfindung betrifft einen Spreizdübel mit den Merkmalen des Oberbegriffs des Anspruchs 1.

Spreizdübel sind an sich bekannt. Sie weisen einen Spreizkanal auf, der sich in einer Längsrichtung des Spreizdübels erstreckt und der an einem hinteren Dübelende zum Einbringen eines stiftförmigen Spreizelements offen ist. Das stiftförmige Spreizelement ist beispielsweise eine Schraube, die in den Spreizkanal des Spreizdübels eingeschraubt wird und dadurch den Spreizdübel aufspreizt, das heißt einen Außenumfang des Spreizdübels vergrößert, wodurch der Spreizdübel in einem Loch in einem Ankergrund festlegbar ist, was als "Verankerern des Spreizdübels" bezeichnet wird. Anstelle einer Schraube kann eine Nagelschraube oder ein Nagel zum Aufspreizen des Spreizdübels in dessen Spreizkanal eingeschlagen werden.

Als "hinteres Dübelende" wird hier dasjenige Ende des Spreizdübels bezeichnet, das eine Öffnung zum Einbringen des Spreizelements in den Spreizkanal aufweist.

Das Patent EP 0 247 282 B1 offenbart einen Spreizdübel mit einem Spreizkanal, der einen Spreizabschnitt des Spreizdübels in der Längsrichtung durchsetzt. An den Spreizabschnitt schließt sich ein rohrförmiger Hohlschaft an, der zwei Längsschlitze einander gegenüber aufweist, so dass er ebenso wie der Spreizabschnitt durch Einbringen eines stiftförmigen Spreizelements aufspreizbar ist. Dadurch lässt sich ein in einem Abstand von einem Ankergrund angeordnetes Bauteil, das der Hohlschaft des Spreizdübels durchsetzt, in dem Abstand von dem Ankergrund an dem Ankergrund festlegen.

Aufgabe der Erfindung ist, einen Spreizdübel der vorstehend erläuterten Art weiter zu bilden, insbesondere um eine bessere Verankerung von Fensterrahmen zu ermöglichen.

Diese Aufgabe wird erfindungsgemäß durch die Merkmale des Anspruchs 1 gelöst. Der erfindungsgemäße Spreizdübel weist einen ihn in einer Längsrichtung durchsetzenden Spreizkanal auf, der an einem hier als "hinteres Dübelende" bezeichneten Ende des Spreizdübels zum Einbringen eines stiftförmigen Spreizelements zum Aufspreizen des Spreizdübels offen ist. Der erfindungsgemäße Spreizdübel weist zwei Spreizabschnitt auf, wobei es sich um zwei Längsabschnitte des Spreizdübels handelt. Der Spreizdübel kann mehr als zwei Spreizabschnitte aufweisen, vorzugsweise weist er jedoch genau zwei Spreizabschnitte auf. Dabei ist der Spreizkanal in einem hinteren Spreizabschnitt enger als in einem vorderen Spreizabschnitt. Der hintere Spreizabschnitt ist dem hinteren Dübelende näher als der vordere Spreizabschnitt, der vorzugsweise an oder nahe an einem vorderen Dübelende beginnt, das dem hinteren Dübelende gegenüber liegt. "Nahe" bedeutet einen Abstand von nicht mehr als zwei Dübeldurchmessern und vorzugsweise nicht mehr als einem Dübeldurchmesser. Als "Dübeldurchmesser" wird der Durchmesser eines gedachten, den Spreizdübel umschreibenden Zylinders verstanden. "Enger" bedeutet, dass ein stiftförmiges Spreizelement mit über seine Länge konstantem Querschnitt den hinteren Spreizabschnitt weiter beziehungsweise stärker aufspreizt als den vorderen Spreizabschnitt.

Der erfindungsgemäße Spreizdübel ist zu einer Befestigung von Fensterrahmen oder Türrahmen aus Kunststoff in einer Bauwerksöffnung einer Wand vorgesehen. Mit "Rahmen" ist im Folgenden ein Fenster- oder Türrahmen, insbesondere mit einem Hohlprofil, gemeint. Fensterrahmen oder Türrahmen aus Kunststoff weisen üblicherweise ein Hohlprofil mit Wänden und Stegen mit einer Dicke zwischen ein Millimeter oder weniger bis wenige Millimeter auf. Beim Aufspreizen des hinteren Spreizabschnitts des erfindungsgemäßen Spreizdübels in einem solchen Fensterrahmen oder Türrahmen schnüren die Wände und Stege des Fensterrahmens oder Türrahmens den Spreizdübel in seinem hinteren Spreizabschnitt ein, wobei die starke Aufspreizung einen festen Halt des Fensterrahmens oder Türrahmens auf dem hinteren Spreizabschnitt des Spreizdübels bewirkt.

Der hintere Spreizabschnitt beginnt bei einer Ausführungsform der Erfindung an oder nahe dem hinteren Dübelende, wobei "nahe" einen Abstand von nicht mehr als zwei Dübeldurchmesser, vorzugsweise nicht mehr als einen Dübeldurchmesser bedeutet.

Eine bevorzugte Ausgestaltung der Erfindung sieht seitliche Öffnungen in einem Spreizabschnitt des Spreizdübels vor. In der Längsrichtung des Spreizdübels benachbarte Öffnungen weisen einen Versatz in Umfangsrichtung auf, wobei vorzugsweise jede zweite Öffnung in dieselbe Richtung weist. Eine Weiterbildung der Erfindung sieht vor, dass benachbarte und einen Versatz in der Umfangsrichtung des Spreizdübels aufweisende Öffnungen in der Längsrichtung des Spreizdübels keinen Abstand voneinander aufweisen, sondern unmittelbar aneinander anschließen oder einander sogar überdecken. Die Öffnungen ermöglichen ein Entformen von zwei oder mehr kammförmigen Hälften eines Spritzgießwerkzeugs nach einem Spritzgießen des Spreizdübels aus Kunststoff, die den Spreizkanal in dem betreffenden Spreizabschnitt des Spreizdübels formen. In der Längsrichtung unmittelbar aneinander anschließende oder einander überdeckende Öffnungen ermöglichen die Herstellung eines ohne Unterbrechungen in der Längsrichtung des Spreizdübels durchgehenden Spreizkanals im betreffenden Spreizabschnitt. Vorzugsweise sind die erläuterten Öffnungen nur in einem Spreizabschnitt vorhanden, möglich sind solche Öffnungen allerdings auch in beiden, mehreren beziehungsweise allen Spreizabschnitten des Spreizdübels.

Insbesondere sind die seitlichen Öffnungen des Spreizkanals in dem vorderen Spreizabschnitt des Spreizdübels vorgesehen.

Eine Ausgestaltung der Erfindung sieht ein geschlossenes vorderes, dem hinteren Dübelende gegenüberliegendes vorderes Dübelende vor.

Die Spreizabschnitte schließen bei einer Ausführung der Erfindung ohne Abstand unmittelbar aneinander an.

Eine Ausgestaltung der Erfindung sieht einen konstanten Querschnitt des Spreizkanals in einem, beiden, mehreren oder allen Spreizabschnitten des Spreizdübels vor, so dass ein stiftförmiges Spreizelement mit über seine Länge konstantem Querschnitt den jeweiligen Spreizabschnitt über seine Länge gleich weit beziehungsweise gleich stark aufspreizt.

Eine weitere Ausgestaltung der Erfindung sieht einen konstanten Querschnitt beziehungsweise Außenumfang des Spreizdübels über seine Länge vor, wobei Unregelmäßigkeiten wie Aussparungen, Vertiefungen oder auch Vorsprünge möglich sind.

Vorzugsweise weicht der Außendurchmesser des hinteren Spreizabschnitts nicht mehr als 20 Prozent, insbesondere nicht mehr als 10 Prozent, ab. Als "Außendurchmesser" wird der Durchmesser eines gedachten, den jeweiligen Spreizabschnitt umschreibenden Zylinders verstanden. Die ähnlichen oder sogar gleichen Außendurchmesser bewirken, dass das Volumen eines passenden Bohrlochs maximal ausgefüllt werden kann, um maximale Haltekräfte zu erreichen.

Eine Schraube als Spreizelement zum Aufspreizen des Spreizdübels weist gemäß einer Ausführungsform der Erfindung ein bis zu einem Schraubenkopf durchgehendes Gewinde auf.

Eine Ausgestaltung der Erfindung sieht eine Senkung in dem hinteren Dübelende zur Aufnahme des Schraubenkopfs der Schraube vor. Dies ermöglicht einen praktisch bündigen Abschluss von Spreizdübel und Schraube auf der Innenseite eines Fensterrahmens. Dabei muss ein Außenumfang des Spreizdübels im Bereich der Senkung nicht vergrößert sein, sondern kann ohne Querschnittsänderung in den hinteren Spreizabschnitt übergehen.

Eine erfindungsgemäße Befestigungsanordnung mit den Merkmalen des Anspruchs 11 sieht eine Befestigung eines Rahmens, insbesondere eines Fensterrahmens oder eines Türrahmens in einer Bauwerksöffnung einer Wand mit dem erfindungsgemäßen Spreizdübel vor. Der Spreizdübel wird durch ein Durchgangsloch im Rahmen in ein Loch in der Wand eingebracht, so dass sich der vordere Spreizabschnitt des Spreizdübels in der Wand und der hintere Spreizabschnitt des Spreizdübels in dem Rahmen befindet. Durch Einbringen einer Schraube als Spreizelement in den Spreizkanal des Spreizdübels werden der vordere und der hintere Spreizabschnitt des Spreizdübels aufgespreizt und dadurch der Spreizdübel in der Wand verankert und der Rahmen auf dem hinteren Spreizabschnitt des Spreizdübels und damit in der Bauwerksöffnung der Wand festgelegt. Ein Abstand des Rahmens von einer Laibung der Bauwerksöffnung bleibt bestehen.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines in der Zeichnung dargestellten Ausführungsbeispiels näher erläutert. Es zeigen:
- Figur 1: einen erfindungsgemäßen Spreizdübel in perspektivischer Seitenansicht;
- Figur 2: einen Achsschnitt des Spreizdübels aus Figur 1 in einer um 90° gedrehten Richtung;
- Figur 3: eine Schraube als Spreizelement für den Spreizdübel aus Figuren 1 und 2 in Seitenansicht; und
- Figur 4: eine erfindungsgemäße Befestigungsanordnung mit dem Spreizdübel aus Figuren 1 und 2.

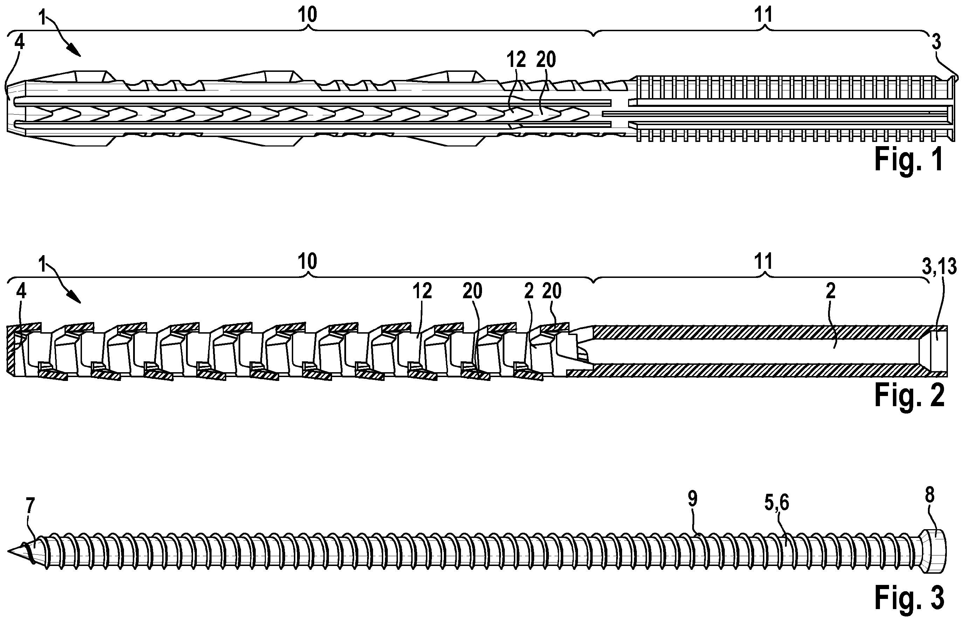

Der in Figuren 1 und 2 dargestellte, erfindungsgemäße Spreizdübel 1 ist durch Spritzgießen aus Kunststoff hergestellt und weist im Wesentlichen die Form eines zylindrischen, hohlen Stifts mit über seine Länge gleichbleibenden Außendurchmesser auf. Der Spreizdübel 1 weist einen axialen, das heißt in einer Längsrichtung des Spreizdübels 1 verlaufenden Spreizkanal 2 auf, der an einem hinteren Dübelende 3 offen ist. An einem gegenüberliegenden vorderen Dübelende 4 ist der Spreizdübel 1 geschlossen. Als hinteres Dübelende 3 wird hier das Ende des Spreizdübels 1 bezeichnet, das offen und zum Einbringen eines stiftförmigen Spreizelements 5 in den Spreizkanal 2 vorgesehen ist. Das vordere Dübelende 4 muss nicht zwingend geschlossen sein.

Im Ausführungsbeispiel ist eine in Figur 3 dargestellte Schraube 6 als Spreizelement 5 vorgesehen, die im Ausführungsbeispiel ein von einer Schraubenspitze 7 bis zu einem Schraubenkopf 8 durchgehendes Schraubengewinde 9 aufweist.

Der Spreizdübel 1 weist einen vorderen Spreizabschnitt 10 und einen hinteren Spreizabschnitt 11 auf, wobei der vordere Spreizabschnitt 10 am vorderen Dübelende 4 beginnt und ohne Abstand unmittelbar in den hinteren Spreizabschnitt 11 übergeht, der fast bis zu dem hinteren Dübelende 3 erreicht. Im Ausführungsbeispiel nimmt der vordere Spreizabschnitt 10 mehr als eine Hälfte einer Länge des Spreizdübels 1 ein.

Im vorderen Spreizabschnitt 10 weist der Spreizdübel 1 Öffnungen 12 auf, die radial in den Spreizdübel 1 hinein und durch eine Querschnittsmitte des Spreizdübels 1 hindurch gehen. Die Öffnungen 12 sind in der Längsrichtung des Spreizdübels 1 versetzt zueinander, wobei benachbarte Öffnungen 12 unmittelbar aneinander anschließen, so dass in der Querschnittsmitte des Spreizdübels 1 ein axiales beziehungsweise in der Längsrichtung durch den vorderen Spreizabschnitt 10 durchgehendes Loch gebildet ist, welches den Spreizkanal 2 im vorderen Spreizabschnitt 10 bildet. In der Längsrichtung des Spreizdübels 1 benachbarte Öffnungen 12 sind einander entgegengesetzt angeordnet, befinden sich also an entgegengesetzten Stellen eines Umfangs des Spreizdübels 1.

Die Öffnungen 12 weisen achsparallele, gerade Längsränder und V-förmige, immer in die gleiche Richtung gerichtete Stirnränder auf, so dass die an jeweils einer Umfangsstelle des Spreizdübels 1 angeordneten Öffnungen 12 durch von einer Seite auf den Spreizdübel 1 gesehen V-förmige, elastische Verbinder 20 voneinander getrennt sind. Die Verbinder 20 verbinden eine Umfangswand des Spreizdübels 1 zwischen jeweils zwei der Öffnungen 12 im vorderen Spreizabschnitt 10 in Umfangsrichtung, weswegen sie hier als Verbinder 20 bezeichnet sind. Wegen ihrer V-Form und ihrer Elastizität lassen die Verbinder 20 ein Aufweiten, das heißt ein Aufspreizen des Spreizdübels 1 im vorderen Spreizabschnitt 10 zu.

Durch die einander abwechselnd entgegengesetzten Öffnungen 12 lässt sich der Spreizkanal 2 im vorderen Spreizabschnitt 10 des Spreizdübels 1 mit zwei kammartigen Kernen in einem Spritzgießwerkzeug herstellen, die einander entgegen gerichtet orientiert sind und nach dem Spritzgießen in Bezug auf den Spreizdübel 1 radial entformt werden. Die Kerne und das Spritzgießwerkzeug sind nicht dargestellt.

Im hinteren Spreizabschnitt 11 ist der Spreizdübel 1 zylinderrohrförmig, wobei eine Wanddicke dicker als im vorderen Spreizabschnitt 10 ist, so dass der Spreizkanal 1 im hinteren Spreizabschnitt 11 enger als im vorderen Spreizabschnitt 10 ist. Dadurch wird durch Eindrehen der das Spreizelement 5 bildenden Schraube 6 der Spreizdübel 1 im hinteren Spreizabschnitt 11 weiter beziehungsweise stärker aufgeweitet beziehungsweise aufgespreizt als im vorderen Spreizabschnitt 10.

Im hinteren Spreizabschnitt 11 des Spreizdübels 1 weist der Spreizkanal 2 einen über die Länge des Spreizabschnitts 11 konstanten Querschnitt auf.

Im hinteren Dübelende 3 weist der Spreizdübel 1 eine zu dem Schraubenkopf 8 komplementäre Senkung 13 zur Aufnahme des Schraubenkopfs 8 auf. Form und Größe eines Außenumfangs des Spreizdübels 1 ändern sich im Bereich der Senkung 13 nicht gegenüber dem hinteren Spreizabschnitt 11, sondern es verringert sich die Wanddicke des Spreizdübels 1 am Übergang vom hinteren Spreizabschnitt 11 zur Senkung 13.

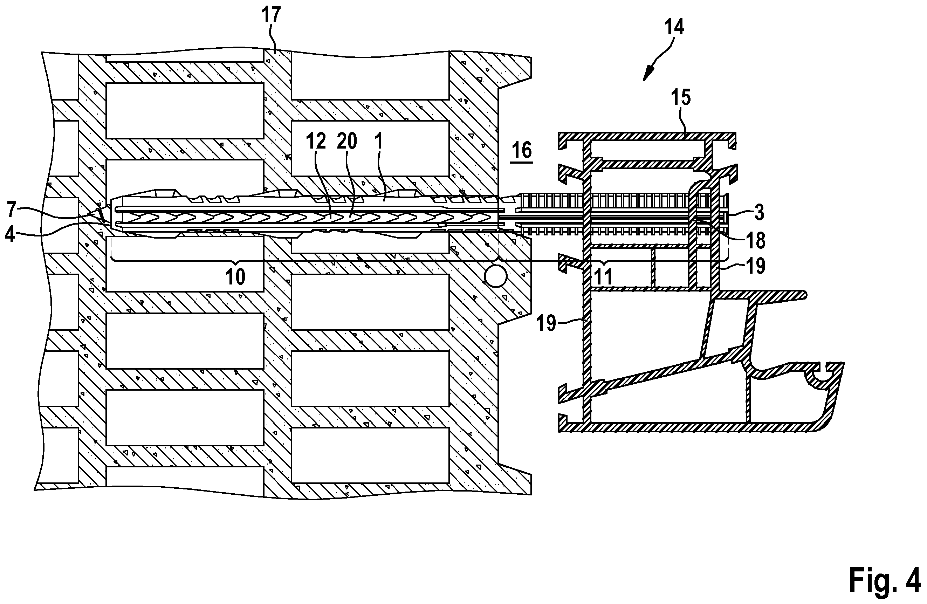

Figur 4 zeigt eine erfindungsgemäße Befestigungsanordnung 14 mit dem erfindungsgemäßen Spreizdübel 1: Mit dem Spreizdübel 1 ist ein Rahmen 15, hier ein Fensterrahmen, aus Kunststoff in einer Bauwerksöffnung 16 einer Wand 17 befestigt. Gezeichnet ist ein Ausbruch der Befestigungsanordnung 14 im Bereich einer Laibung der Bauwerksöffnung 16. Der Rahmen 15 weist ein Hohlprofil mit Stegen 18 und Profilwänden 19 auf, die jeweils etwa 1 bis 2 mm dick sind. Der Spreizdübel 1 ist durch ein Durchgangsloch im Rahmen 15 in ein Loch in der Profilwand 19 gesteckt, die allgemein auch als Ankergrund aufgefasst werden kann. Der vordere Spreizabschnitt 10 des Spreizdübels 1 befindet sich in der Wand 17 und der hintere Spreizabschnitt 11 des Spreizdübels 1 im Rahmen 15. Durch Einschrauben der das Spreizelement 5 bildenden Schraube 6 durch das offene hintere Dübelende 3 in den Spreizkanal 2 des Spreizdübels 1 wird beziehungsweise ist der Spreizdübel 1 aufgespreizt. Der vordere Spreizabschnitt 10 ist in dem Loch in der Wand 17 aufgespreizt, wodurch der Spreizdübel 1 in der Wand 17 verankert ist. Der hintere Spreizabschnitt 11 ist wegen seines engeren Spreizkanals 2 stärker aufgespreizt, er wird von den Profilwänden 19 und Stegen 18 des Hohlprofils des Rahmens 15 an Durchtrittsstellen eingeschnürt und weist infolgedessen einen guten Halt auf dem Spreizdübel 1 auf. Ein Abstand des Rahmens 15 von der Laibung der Bauwerksöffnung 16 in der Wand 17 wird bei der Befestigung des Rahmens 15 mit dem Spreizdübel 1 beibehalten.

### Bezugszeichenliste

- 1: Spreizdübel
- 2: Spreizkanal
- 3: hinteres Dübelende
- 4: vorderes Dübelende
- 5: Spreizelement
- 6: Schraube
- 7: Schraubenspitze
- 8: Schraubenkopf
- 9: Schraubengewinde
- 10: vorderer Spreizabschnitt
- 11: hinterer Spreizabschnitt
- 12: Öffnung
- 13: Senkung
- 14: Befestigungsanordnung
- 15: Rahmen
- 16: Bauwerksöffnung
- 17: Wand
- 18: Steg
- 19: Profilwand
- 20: Verbinder

## Patentansprüche

1. Spreizdübel mit einem den Spreizdübel (1) in einer Längsrichtung durchsetzenden Spreizkanal (2), der an einem hinteren Dübelende (3) zum Einbringen eines stiftförmigen Spreizelements (5) zum Aufspreizen des Spreizdübels (1) offen ist, **dadurch gekennzeichnet, dass** der Spreizkanal (2) in einem dem hinteren Dübelende (3) näheren hinteren Spreizabschnitt (11) enger als in einem dem hinteren Dübelende (3) ferneren vorderen Spreizabschnitt (10) ist.

2. Spreizdübel nach Anspruch 1, **dadurch gekennzeichnet, dass** der vordere Spreizabschnitt (10) nicht weiter als zwei, vorzugsweise nicht weiter als ein Dübeldurchmesser von einem dem hinteren Dübelende (3) gegenüberliegenden vorderen Dübelende (4) entfernt beginnt und/oder dass der hintere Spreizabschnitt (11) bis zu dem hinteren Dübelende (3) oder bis mindestens in eine Entfernung von zwei, vorzugsweise einem Dübeldurchmesser vom hinteren Dübelende (3) reicht.

3. Spreizdübel nach Anspruch 1 oder 2, **dadurch gekennzeichnet, dass** der Spreizkanal (2) in einem der beiden Spreizabschnitte (10, 11) seitliche Öffnungen (12) aufweist, wobei in der Längsrichtung des Spreizdübels (1) benachbarte Öffnungen (12) einen Versatz in Umfangsrichtung aufweisen.

4. Spreizdübel nach Anspruch 3, **dadurch gekennzeichnet, dass** die in der Längsrichtung des Spreizdübels (1) benachbarten Öffnungen (12) des Spreizkanals (2) ohne Abstand in der Längsrichtung des Spreizdübels (1) aneinander anschließen oder einander überdecken.

5. Spreizdübel nach Anspruch 3 oder 4, **dadurch gekennzeichnet, dass** sich die seitlichen Öffnungen (12) des Spreizkanals (2) in dem vorderen Spreizabschnitt (10) des Spreizdübels (1) befinden.

6. Spreizdübel nach einem oder mehreren der vorhergehenden Ansprüche, **dadurch gekennzeichnet, dass** der Spreizkanal (2) an einem dem hinteren Dübelende (3) gegenüberliegenden vorderen Dübelende (4) geschlossen ist.

7. Spreizdübel nach einem oder mehreren der vorhergehenden Ansprüche, **dadurch gekennzeichnet, dass** der Spreizdübel (1) keine weiteren als den vorderen und den hinteren Spreizabschnitt (10, 11) aufweist und/oder dass die beiden Spreizabschnitte (10, 11) unmittelbar aneinander anschließen.

8. Spreizdübel nach einem oder mehreren der vorhergehenden Ansprüche, **dadurch gekennzeichnet, dass** der Spreizkanal (2) in einem Spreizabschnitt (11) einen über seine Länge konstanten Querschnitt aufweist.

9. Spreizdübel nach einem oder mehreren der vorhergehenden Ansprüche, mit einer Schraube (6) als Spreizelement (5) zum Aufspreizen des Spreizdübels (1), **dadurch gekennzeichnet, dass** die Schraube (5) ein bis zu einem Schraubenkopf (8) durchgehendes Schraubengewinde (9) aufweist.

10. Spreizdübel nach einem oder mehreren der vorhergehenden Ansprüche, mit einer Schraube (6) als Spreizelement (5) zum Aufspreizen des Spreizdübels (1), **dadurch gekennzeichnet, dass** die Schraube (6) einen Schraubenkopf (8) und dass der Spreizdübel (1) eine Senkung (13) zur Aufnahme des Schraubenkopfs (8) am hinteren Dübelende (3) aufweist.

11. Befestigungsanordnung mit einer eine Bauwerksöffnung (16) aufweisenden Wand (17), einem in der Bauwerksöffnung (16) angeordneten Rahmen (15), einem Spreizdübel (1) nach einem oder mehreren der vorhergehenden Ansprüche, mit dem der Rahmen (15) in der Bauwerksöffnung (16) der Wand (17) befestigt ist, und mit einer Schraube (6), die in den Spreizdübel (1) eingebracht ist und die den Spreizdübel (1) aufspreizt, wobei sich der hintere Spreizabschnitt (11) des Spreizdübels (1) in dem Rahmen (15) und der vordere Spreizabschnitt (10) des Spreizdübels (1) in der Wand (17) befindet.
